(19) Europäisches Patentamt
European Patent Office
Office européen des brevets

(11) **EP 1 811 379 B1**

(12) **EUROPÄISCHE PATENTSCHRIFT**

(45) Veröffentlichungstag und Bekanntmachung des Hinweises auf die Patenterteilung:
**15.10.2014 Patentblatt 2014/42**

(51) Int Cl.:
***G06F 11/267*** (2006.01)

(21) Anmeldenummer: **06127166.4**

(22) Anmeldetag: **22.12.2006**

(54) **Verfahren zum Debuggen eines Mikrocontrollers, Mikrocontrollervorrichtung und Debugvorrichtung**

Method for debugging a microcontroller, microcontroller device and debug device

Procédé destiné au débogage d'un microcontrôleur, dispositif de microcontrôleur et dispositif de débogage

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.01.2006 DE 102006002354**

(43) Veröffentlichungstag der Anmeldung:
**25.07.2007 Patentblatt 2007/30**

(73) Patentinhaber: **ROBERT BOSCH GMBH 70442 Stuttgart (DE)**

(72) Erfinder: **Bach, Peter Stuttgart 70193 (DE)**

(56) Entgegenhaltungen:
**US-B1- 6 385 754    US-B1- 6 653 957**

**Beschreibung**

Die Erfindung betrifft ein Verfahren zur Kommunikation zwischen einem Mikrocontroller und einem Debugger, eine Mikrocontrollervorrichtung und eine Debugvorrichtung.

Eine Mikrocontollervorrichtung, d. h ein Rechner, kann beispielsweise ein Steuergerät, insbesondere ein Motorsteuergerät eines Kraftfahrzeugs sein.

Ein Debugger ist ein Entwicklungswerkzeug, das vor allem zum Auffinden und Eliminieren von Software-Fehlern (debugging) und zur dynamischen Code-Analyse (tracing & profiling) eingesetzt wird. Der Debugger wird über eine Debugschnittstelle (Debug-Interface) an den zu untersuchenden Mikrocontroller ($\mu$C) angeschlossen. Viele aktuelle Mikrocontroller sind mittlerweile mit einer standardisierten Debugschnittstelle ausgestattet, z. B JTAG/Nexus.

JTAG/Nexus besteht aus zwei Protokollen: JTAG und Nexus, die über separate Verbindungen geführt werden. Während das JTAG-Protokoll zum langsamen Lesen und Schreiben von internen $\mu$C-Registern, zum Programmieren der internen $\mu$C-Speicher und für Fertigungstests der Baugruppe verwendet wird, dient das Nexus-Protokoll dem schnellen Echtzeitzugriff auf interne $\mu$C-Komponenten, z. B Instruktionszähler. Details zu JTAG/Nexus sind in IEEE-ISTO-5001™-2003, datiert 23. Dezember 2003, definiert. Dieses Standardwerk ist beispielsweise unter www.nexus5001.org erhältlich.

Um die - besonders beim Tracing - anfallenden Datenraten zu übertragen, kommen parallele Übertragungstechniken zum Einsatz, bei der die Daten über mehrere Leitungen, beispielsweise 20 Leitungen, verteilt übertragen werden.

Durch die parallele Übertragung ist die Leitungslänge zwischen Mikrocontroller und Debugger begrenzt. Üblicherweise sind die Debugschnittstellen-Treiber des Mikrocontrollers auf eine Kabellänge von ca. 10 cm ausgelegt. Daher muss der Debugger sehr nahe am zu untersuchenden Mikrocontroller betrieben werden. Debugging eines im Fahrzeug verbauten Motorsteuergerätes ist aus Platz- und Temperaturgründen nicht möglich.

Selbst die Verstärkung des Interfaces mit zusätzlichen externen Treibern ist nicht praktikabel, da das benötigte hochpolige Kabel starr und unflexibel wäre.

Aus der US 6, 385, 754 B1 ist ein Überwachungsystem mit Konverter bekannt, wobei die Konverter parallele in serielle und serielle in parallele Datenströme umwandeln.

Aus der DE 199 03 302 A1 ist ein Verfahren zur Überprüfung der Funktion eines Rechners unter realen Einsatzbedingungen bekannt, wobei der Rechner hierzu mit einem Ersatzspeicher verbunden wird und im Ersatzspeicher ein Hilfsprogramm vorgesehen ist, welches bei Aktivierung vom Rechner ausgeführt wird und Informationen über innere Betriebszustände des Rechners zur Verfügung stellt.

Es ist Aufgabe der vorliegenden Erfindung, ein Verfahren zur Kommunikation zwischen einem Mikrocontroller und einem Debugger bereitzustellen, welches eine größere Leitungslänge zwischen dem Mikrocontroller und dem Debugger ermöglicht.

Diese Aufgabe wird durch ein Verfahren sowie eine Mikrocontrollervorrichtung und eine Debugvorrichtung gemäß dem unabhängigen Ansprüchen gelöst.

Ein wesentlicher Punkt der Erfindung besteht dabei darin, dass durch die serialisierte Übertragung zwischen Mikrocontroller und Debugger ein Kabel mit deutlich größerer Länge, beispielsweise ca. 1 Meter bis 2 Meter verwendet werden kann. Dies erlaubt die flexible Positionierung des Debuggers relativ zum Steuergerät und damit beispielsweise das Debugging eines im Fahrzeug verbauten Motorsteuergeräts ohne Änderung der verwendeten Debugger-Software.

Die Erfindung ist definiert durch die unabhängigen Ansprüche 1, 4, 7, 8.

Vorteilhafte Weiterbildungen der Erfindung sind in den Unteransprüchen angegeben.

Beispielsweise können die Debugschnittstelle des Mikrocontrollers und/oder die Debugschnittstelle des Debuggers als konventionelle, parallele JTAG/Nexus-Schnittstelle ausgebildet sein, wobei die Serialisierung/Deserialisierung über einen entsprechenden Konverter erfolgt. Die serielle Debugschnittstelle bildet in diesem Fall eine serielle JTAG/Nexus-Schnittstelle.

Die Erfindung umfasst gemäß einer Ausführungsform auch Debugger mit einer seriellen Debugschnittstelle, insbesondere einer seriellen JTAG/Nexus-Schnittstelle, welche direkt an das serielle Kabel angeschlossen werden kann. Damit entfällt der debuggerseitige Konverter.

Ferner kann gemäß einer Ausführungsform der Erfindung die serielle Debugschnittstelle der Mikrocontrollervorrichtung, beispielsweise eine serielle JTAG/Nexus-Schnittstelle direkt im Mikrocontroller implementiert werden. Eine im Mikrocontroller realisierte serielle JTAG/Nexus-Schnittstelle hat den Vorteil, dass in der Mikrocontrollervorrichtung, beispielsweise in einem Steuergerät, keine zusätzliche Hardware verbaut werden muss und die Debugschnittstelle nur sehr wenige $\mu$C-Pins belegt.

Die Erfindung wird im folgenden anhand von bevorzugten Ausführungsbeispielen näher erläutert. Es zeigen:

Fig. 1    schematisch eine Ausführungsform einer Mikrocontrollervorrichtung und eine Ausführungsform einer Debugvorrichtung nach der Erfindung;

Fig. 2          schematische eine Detailansicht einer Ausführungsform eines Konverters der Mikrocontrollervorrichtung aus Fig. 1;

Fig. 3          schematisch die Mikrocontrollervorrichtung aus Fig. 1 und eine weitere Ausführungsform einer Debugvorrichtung nach der Erfindung;

Fig. 4          schematisch eine weitere Ausführungsform einer Mikrocontrollervorrichtung nach der Erfindung und die Debugvorrichtung aus Fig. 3;

Fig. 5          schematisch den Aufbau eines Datenpakets einer beispielhaften Ausführungsform eines medienunabhängigen Bus gemäß der Erfindung;

Fig. 6          eine Auflistung von gemäß der beispielhaften Ausführungsform definierten Datenströmen;

Fig. 7 und 8    schematisch Ereignis-Signal-Pakete gemäß der beispielhaften Ausführungsform;

Fig. 9 und 10   schematisch Nexus-Datenpakete gemäß der beispielhaften Ausführungsform eines medienunabhängigen Busses für eine Ausführungsform von Nexus-Aux-Ports;

Fig. 11 bis 13  schematisch Nexus-Datenpakete gemäß der beispielhaften Ausführungsform eines medienunabhängigen Busses für eine weitere Ausführungsform von Nexus-Aux-Ports;

Fig. 14 und 15  schematisch JTAG-Datenpakete gemäß einer Ausführungsform der Erfindung;

Fig. 16         schematisch eine Tabelle für die Anzahl der benutzten JTAG-Zustände in einem Datenpaket;

Fig. 17         schematisch eine Ausführungsform eines Datenformates für Zugriffe auf interne Register des Konverters;

Fig. 18         schematisch einen JTAG-Pfad gemäß einer Ausführungsform der Erfindung, und

Fig. 19         schematisch in vereinfachter Form einen zeitlichen Ablauf eines JTAG-Zugriffs bei der in Fig. 18 dargestellten Ausführungsform der Erfindung.

Im Folgenden wird ein Ausführungsbeispiel der Erfindung erläutert, bei welchem ein Mikrocontroller 2 und ein Debugger 4 jeweils eine konventionelle, parallele JTAG/Nexus-Schnittstelle 6, 8 aufweisen. Ferner werden einige der möglichen Varianten erläutert. Das dargestellte Ausführungsbeispiel beschreibt somit ein serielles JTAG/Nexus-Konzept.

Im Rahmen der Erfindung ist die Verwendung eines anderen Protokolls an Stelle des JTAG/Nexus-Protokolls möglich.

Die Realisierung eines seriellen JTAG/Nexus-Konzepts ist nicht trivial, da die folgenden Anforderungen erfüllt werden müssen:

1) Hohe Bandbreite: Trace-Vektoren werden mit über 1 GBit/s vom Mikrocontroller 2 ausgegeben.

2) Geringe Latenz: Das JTAG-Protokoll toleriert nur wenige 100ns Latenz ohne signifikanten Performance-Verlust

3) Asynchroner JTAG- und Nexus-Takt: JTAG wird üblicherweise mit Taktraten zwischen 1 bis 20 MHz betrieben, Nexus erfordert Taktraten zwischen 50 MHz und 150 MHz. Beide Takt-Signale sind asynchron und haben keinen Zeitbezug zueinander.

4) Taktsynchrone Übertragung der JTAG-Daten: Zwischen dem Senden von JTAG-Daten vom Debugger 4 zum Mikrocontroller 2 und dem Empfangen der Antwort muss eine konstante Anzahl von JTAG-Takten liegen. Außerdem ist es vorteilhaft, die folgenden Anforderungen zu erfüllen:

5) Dynamische Bandbreitenzuteilung zwischen JTAG- und Nexus-Datenstrom: Das Verhältnis von übertragenen JTAG- zu Nexus-Daten hängt von vielen Faktoren (Prozessortyp, ausgeführtes Programm, gewählter Debug-Modus) ab. Für die meisten Anwendungen würde daher eine konstante Einteilung der Gesamtbandbreite in JTAG-Teil und Nexus-Teil ungünstig ausfallen. Eine dynamische Zuteilung mit geeigneter Datenstrom-Priorisierung wird benötigt.

6) Flexible Anpassung der Nexus-Datenstrombreite (AUX-Bus): Die JTAG/Nexus-Norm lässt dem Mikrocontroller-Hersteller viele Freiheiten in der Implementierung der parallelen Debugschnittstelle. Insbesondere kann die Busbreite der beiden AUX-Busse (MDO und MDI) beliebig gewählt werden. Das Serielle JTAG/Nexus-Protokoll muss alle Busbreiten effektiv übertragen können.

Die nachfolgenden Ausführungsbeispiele beschreiben eine Möglichkeit, ein serielles JTAG/Nexus so zu realisieren, dass die oben genannten Anforderungen erfüllt werden.

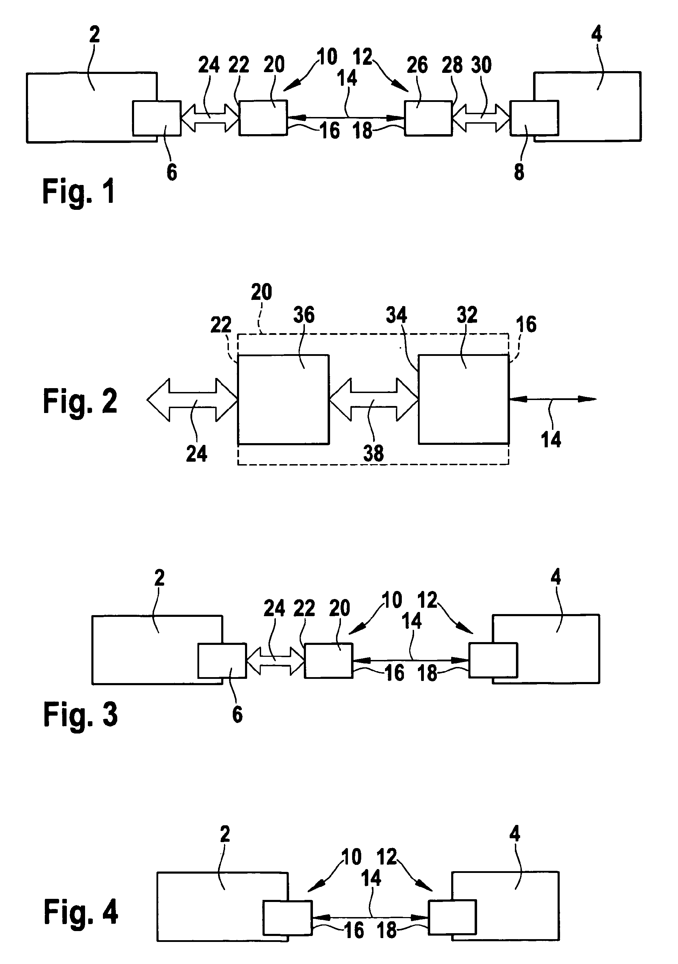

Figur 1 zeigt schematisch eine Ausführungsform einer Mikrocontrollervorrichtung 10, hier beispielhaft in Form eines Steuergeräts eines Kraftfahrzeugs, und eine Ausführungsform einer Debugvorrichtung 12 nach der Erfindung, die über eine serielle Datenübertragungsverbindung 14, d. h über einen seriellen Link, datenübertragungsmäßig verbunden sind.

Ein Verfahren zum Debuggen des Mikrocontrollers 2 mittels des Debuggers 4, wobei der Mikrocontroller 2 mittels eines Datenstromes mit dem Debugger 4 kommuniziert, ist gemäß der Erfindung dadurch gekennzeichnet, dass der Datenstrom für eine Übertragung über eine serielle Datenübertragungsverbindung 14 serialisiert und der serialisierte Datenstrom nach der Übertragung über die serielle Datenübertragungsverbindung 14 deserialisiert wird.

Die Mikrocontrollervorrichtung 10 enthält den Mikrocontroller 2 und weist eine serielle Debugschnittstelle 16 zur Kommunikation des Mikrocontrollers 2 mit einem Debugger 4 über die serielle Datenübertragungsverbindung 14 auf, zum hierdurch Debuggen einer Software des Mikrocontrollers 2 mittels der Debugvorrichtung 12 über die serielle Datenübertragungsverbindung 14.

Die in Figur 1 dargestellte Debugvorrichtung 12 enthält den Debugger 4 zum Debuggen des Mikrocontrollers 2 und weist eine serielle Debugschnittstelle 18 zur Kommunikation des Debuggers 4 mit dem Mikrocontroller 2 über die serielle Datenübertragungsverbindung 14 auf.

Der Mikrocontroller 2 und der Debugger 4 weisen jeweils die parallele Debugschnittstelle 6, 8 in Form einer konventionellen JTAG/Nexus-Schnittstelle auf.

Die Mikrocontrollervorrichtung 10 weist einen Konverter 20 mit einer parallelen Konverterschnittstelle 22 zur Kommunikation mit der parallelen Debugschnittstelle 6 des Mikrocontrollers 2 über eine parallele Datenübertragungsverbindung 24, d. h über einen parallelen Debug-Link, auf. Der Konverter 20 weist ferner die serielle Debugschnittstelle 16 der Mikrocontrollervorrichtung 10 auf.

Die Debugvorrichtung 12 weist einen Konverter 26 mit einer parallelen Konverterschnittstelle 28 zur Kommunikation mit der parallelen Debugschnittstelle 8 des Debuggers 4 über eine parallele Datenübertragungsverbindung 30 auf. Der Konverter 26 weist ferner die serielle Debugschnittstelle 18 der Debugvorrichtung 12 auf.

Der Konverter 20 der Debugvorrichtung 12 und der Konverter 26 der Mikrocontrollervorrichtung 10 sind jeweils ausgebildet zum Konvertieren eines Datenstromes zwischen einem parallelen Datenstrom an ihrer parallelen Konverterschnittstelle 22, 28 und einem seriellen Datenstrom an ihrer seriellen Debugschnittstelle 16, 18.

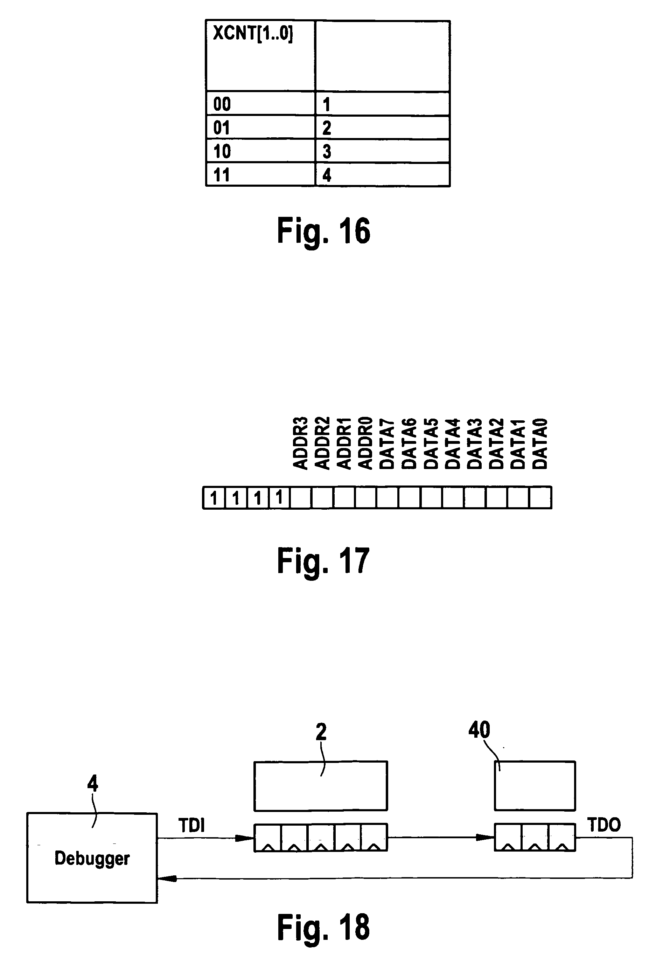

Die Datenübertragungsverbindungen im Rahmen dieser Beschreibung können u-nidirektionale Datenübertragungsverbindungen oder bidirektionale Datenübertragungsverbindungen sein. Beispielsweise kann eine JTAG-Datenübertragung bidirektional erfolgen. Insbesondere kann eine JTAG-Datenübertragung in einem Ringpfad unidirektional und damit effektiv bidirektional erfolgen, wie in Figur 18 dargestellt. Eine Nexus-Datenübertragung kann beispielsweise unidirektional vom Mikrocontroller 2 zum Debugger 4 erfolgen.

Mindestens einer von dem Mikrocontroller 2 und dem Debugger 4, beispielsweise sowohl der Mikrocontroller 2 als auch der Debugger 4 können so ausgebildet sein, dass sie in einem gerätespezifischen Datenstromformat kommunizieren, beispielsweise über einen Nexus-AUX-Port mit einer bestimmten Busbreite. In diesem Fall kann vorgesehen sein, dass vor der dem Schritt der Serialisierung der betreffende gerätespezifische Datenstrom in ein vorbestimmtes Datenstromformat konvertiert wird. Entsprechend kann vorgesehen sein, dass nach dem Schritt der Deserialisierung der Datenstrom von dem vorbestimmten Datenstromformat in das betreffende gerätespezifische Datenstromformat konvertiert wird.

Beispielsweise kann der Konverter 20 der Mikrocontrollervorrichtung 10 und/oder der Konverter 26 der Debugvorrichtung 12 einen Konverterbaustein 32 mit einer parallelen Bausteinschnittstelle 34 und der seriellen Schnittstelle 16, sowie eine Protokolllogik 36 zum Konvertieren eines Datenstromes zwischen einem der parallelen Konverterschnittstelle 22 angepassten parallelen Datenstrom (paralleler Debug-Link 24) und einem dem Konverterbaustein 32 angepassten parallelen Datenstrom (hier einem parallelen 16-Bit-Link 38) enthalten. In Figur 2 ist exemplarisch der Konverter 20 der Mikrocontrollervorrichtung 10 dargestellt. Der Konverter 26 der Debugvorrichtung 12 ist in der Anordnung des Konverterbausteins und der Protokolllogik spiegelbildlich aufgebaut (nicht dargestellt).

Die Protokolllogik 36 kann in einem programmierbaren Baustein, beispielsweise einem FPGA-Baustein implementiert sein. In der beispielhaften Ausführungsform wird der parallele Debug-Link 24 des Mikrocontrollers 2 (JTAG-Schnittstelle und Nexus-Schnittstelle) durch die Protokolllogik 36 in einen medienunabhängigen 16-Bit Bus (paralleler 16-Bit-Link 38) gewandelt. Ein Konverterbaustein 32 in Form eines handelsüblichen SerDes-Bausteins (beispielsweise TLK3101 von Texas Instruments) übernimmt die Serialisierung und Deserialisierung dieses parallelen 16-Bit-Datenstroms. Die Zurückwandlung von seriellem JTAG/Nexus in einen konventionellen parallelen Debug-Link (eine Debugschnittstelle) erfolgt entsprechend, d. h der serielle JTAG/Nexus-Datenstrom wird von einem SerDes-Baustein in einen entsprechenden Medienunabhängigen 16-Bit Datenstrom gewandelt, der dann von einer Protokolllogik in einen konventionellen JTAG/Nexus-Datenstrom gewandelt wird.

Eine Serialisierung / Deserialisierung des Datenstroms in einer Rückrichtung vom Debugger zum Mikrocontroller erfolgt entsprechend.

Figuren 3 und 4 zeigen von in Figur 1 dargestellten Anordnung abweichende Ausführungsformen der Erfindung.

In Figur 3 ist eine Debugvorrichtung 12 dargestellt, deren serielle Debugschnittstelle 18, hier in Form einer seriellen JTAG/Nexus-Schnittstelle, in dem Debugger 4 implementiert ist. Der Debugger 4 ist direkt an die serielle Datenübertragungsverbindung 14, vorliegend ein serielles Kabel, angeschlossen. Damit entfällt der Konverter 26 der Debugvorrichtung 12 aus Figur 1.

In Figur 4 ist eine Mikrocontrollervorrichtung 10 dargestellt, deren serielle Debugschnittstelle 16, hier in Form einer seriellen JTAG/Nexus-Schnittstelle, in dem Mikrocontroller 2 implementiert ist. Dies hat den Vorteil, dass in der Mikrocontrollervorrichtung 10 keine zusätzlich Hardware, z. B. der Mikrocontrollerseitige Konverter 20, verbaut werden muss; ferner belegt die serielle Debugschnittstelle 16 nur sehr wenige pC-Pins.

Nachfolgend wird das Protokoll des medienunabhängigen 16-Bit Bus 38 der beispielhaften Ausführungsform beschrieben. Das Protokoll ist paketbasiert. Ein Datenpaket besteht aus einem 16-Bit-Wert, welcher von dem Konverterbaustein 32 in einem Schritt übertragen bzw. empfangen werden kann.

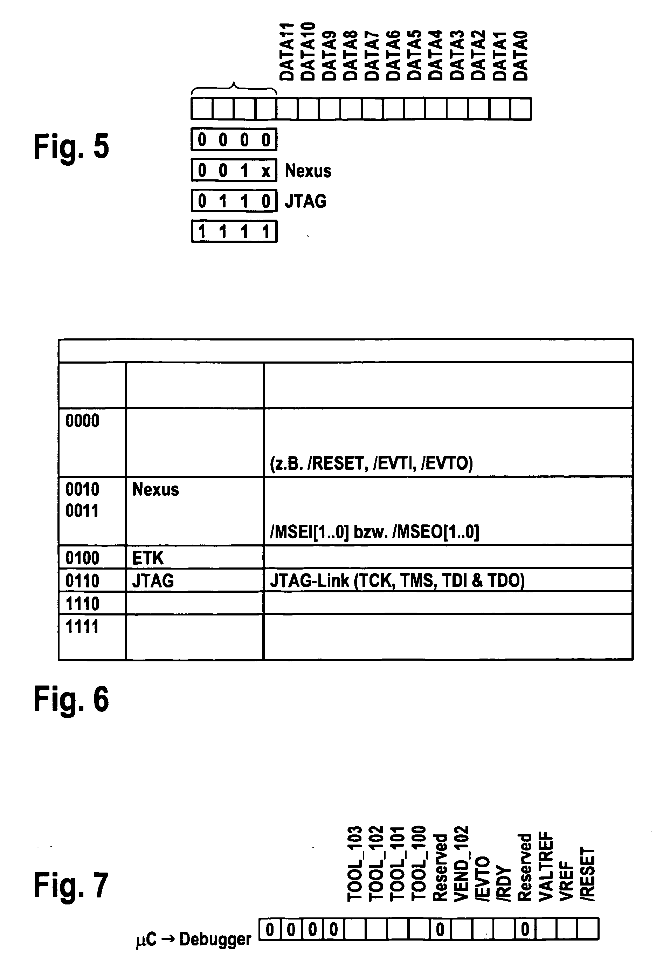

Figur 5 zeigt den Grundaufbau aller Pakete: Eine vorbestimmte Anzahl der obersten Bit, beispielsweise wie vorliegend die obersten vier Bit, bestimmen den zu übertragenden Datenstrom (Stream) und werden nachfolgend als Datenstrom-Bit bezeichnet. Die übrigen Bit, hier 12 Bit, dienen als Nutzdaten DATA[11..0].

Figur 6 zeigt die in der beispielhaften Ausführungsform definierten Datenströme. Das ETK-Protokoll steht hier stellvertretend für ein beliebiges anderes Protokoll als JTAG/Nexus. Die übrigen Datenströme sind in der beispielhaften Ausführungsform noch nicht verwendet.

Vorzugsweise erfolgt eine dynamische Zuteilung der verfügbaren Bandbreite zwischen verschiedenen Datenströmen, beispielsweise zwischen einem JTAG-Datenstrom und einem Nexus-Datenstrom.

In der beispielhaften Ausführungsform erfolgt die Arbitrierung der Datenströme nach einem Prioritätsschema. Je größer der Wert der Datenstrom-Nummer (obersten vier Bits), desto höher ist die Priorität des entsprechenden Datenstroms. Niedrigste Priorität haben die Ereignis-Signal-Pakete, höchste Priorität haben die Pakete mit Internen-Register-Daten. Konkurrieren mehrere Pakete um eine Übertragung, so wird das mit der höchsten Priorität übertragen. Um eine Maximal-Latenz zu garantieren, wird nach spätestens einer vorbestimmten Anzahl von Paketen, beispielsweise nach spätestens 32 Paketen, immer ein Ereignis-Signal-Paket übertragen, auch wenn Pakete anderer Datenströme anstehen.

Nachfolgend werden die einzelnen Datenstromformate der beispielhaften Ausführungsform näher erläutert.

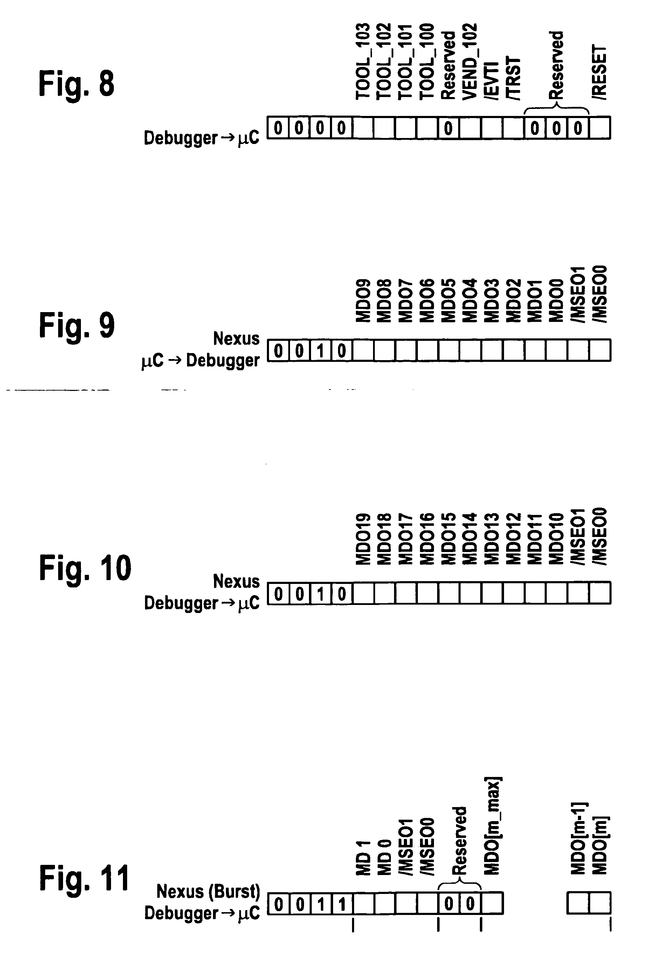

Die Figur 7 und Figur 8 definieren das Format eines Ereignis-Signal-Pakets für beide Richtungen, vom Mikrocontroller 2 ($\mu$C) zum Debugger 4 und vom Debugger 4 zum Mikrocontroller 2. Die Signal-Namen folgen den im Nexus-Standard definierten Regeln. Die mit "Reserved" bezeichneten Bits sind noch nicht definiert und werden als 0 übertragen.

Die Figur 9, Figur 10, Figur 11 und Figur 12 stellen die Datenpakete für Nexus dar. Hierbei wird unterschieden, wie breit die entsprechenden Nexus-AUX-Ports des Mikrocontrollers 2 sind:

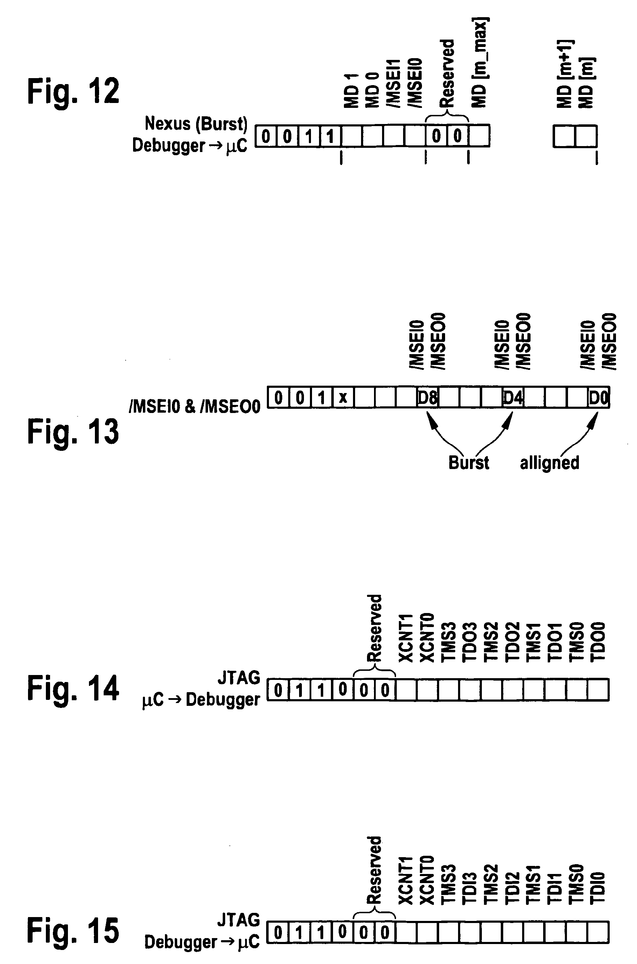

Besitzt der Nexus-Aux-Port eine Busbreite von 10 Bit oder kleiner, wird kein Burst-Paket (Figur 11 und Figur 12) gesendet. In diesem Fall passt ein vollständiges Nexus-Paket (bestehend als MDI-Bus &/MSEI[1..0] bzw. MDO-Bus & /MS EO[1..0]) in ein einziges Datenpaket (Figur 9 bzw. Figur 10). Alle unbenutzten Bits (beginnend bei MD19 bzw. MDO9) werden mit 0 aufgefüllt.

Ist der Nexus-Aux-Port breiter als 10 Bit, muss das Nexus-Paket auf mehrere Daten-Pakete aufgeteilt werden. Der erste Teil wird wie in den Figur 9 und Figur 10 dargestellt übertragen. Auf den Bit-Position 1 und 0 des Datenpakets stehen /MSEI[1..0] bzw. /MSEO[1..0], danach folgt das niederwertigste Bit des MDI- bzw. MDO-Bus.

In einem folgenden Paket werden die übrigen (höherwertigen) Bits des MDI- bzw. MDO-Bus übertragen. Vorzugsweise werden die höherwertigen Bits in dem folgenden Paket von dem niederwertigsten Bit (DATAO) an beginnend aufgefüllt. Um Bandbreite zu sparen, kann im gleichen Paket ein weiteres Nexus-Paket starten. Dabei wird der mögliche Anfang dieses Pakets auf drei Bit-Positionen im Datenpaket reduziert, um die Protokolllogik 36 nicht unnötig zu vergrößern. Figur 13 zeigt diese Positionen (DATA8 und DATA4 bei Burst-Datenpaketen, DATAO bei normalen Nexus-Daten-Paketen). Falls kein weiteres Nexus-Paket in diesem Datenpaket folgt, werden die nicht verwendeten Datenbits auf 0 gesetzt.

Die Stream-Nummer ist 0010 für das erste Nexus-Datenpaket und 0011 für Nexus-Burst-Datenpakete. Abhängig von der Busbreite des Nexus-Aux-Ports können dem ersten Nexus-Datenpaket beliebig viele Nexus-Burst-Datenpakete folgen.

Wird für den Medienunabhängigen Bus eine Busbreite verwendet, die von der beispielhaften Breite von 16 Bit abweicht, ändert sich der Aufbau der Nexus-Datenpakete entsprechend. Die/MSEI[1..0] bzw. /MSEO[1..0] Signale belegen jeweils zwei Bit, so dass bei einer Busbreite des medienunabhängigen Bus von x Bit eine nachfolgend definierte Anzahl Y von Nexus-AUX-Port-Bit in einem Datenpaket übertragen werden kann. Hierbei ist

$$Y = x - (\text{Anzahl der Datenstrombit}) - 2$$

Wie oben angegeben, können beispielsweise bei einer Breite des datenunabhängigen Medienbus von x = 16 und vier Datenstrom-Bit Y = 16 - 4 - 2 = 10 Bit des Nexus-AUX-Port in einem Datenpaket übertragen werden.

Das Taktsignal MCKO wird nicht übertragen, sondern bei jedem Empfang eines Nexus-Datenpakets vom Konverter generiert.

Die Figur 14 und Figur 15 definieren Datenpakete für JTAG. Ein JTAG-Datenpaket kann ein bis vier JTAG-Zustände, bestehend aus TMS und TDO bzw. TDI enthalten. JTAG-Zustand 0 (TMS0 und TDO0 bzw. TDI0 ist der zeitlich erste Zustand. Die Zustände werden von Datenbit 0 beginnend aufgefüllt. Unbenutzte JTAG-Zustände werden mit 0 belegt. Die beiden Bits XCNT[1..0] geben die Anzahl der benutzten JTAG-Zustände im Datenpaket wieder (Figur 16).

Die redundante Übertragung des TMS-Signals auf dem Rückweg vom Mikrocontroller 2 zum Debugger 4 dient zur Synchronisation von Rückweg und Hinweg (siehe hierzu den nachfolgenden Abschnitt über die JTAG-Synchronisation). Das Taktsignal TCK wird nicht übertragen, sondern - wie im Nexus-Datenstrom - bei jedem Empfang eines JTAG-Datenpakets vom Konverter generiert.

Figur 17 zeigt das Datenformat für Zugriffe auf interne Register des Konverters. Diese Register dienen der Konfiguration des Konverters von der Gegenseite aus und zur Übertragung von Statusinformationen vom Konverter zur Gegenseite.

Die Adressbits ADDR[3..0] geben die Adresse an, auf die der Zugriff erfolgt. Die Datenbits DATA[7..0] enthalten den zu übertragenden Wert.

Durch die Serialisierung und Deserialisierung des JTAG-Ports wird eine zusätzliche Latenz erzeugt. Um den Debugger 4 auf diese Latenz anzupassen, werden dem JTAG-Pfad virtuelle Register 40 hinzugefügt (schematisch in Figur 18 dargestellt). Bei der beispielhaften Ausführungsform, wie sie in Figur 1 dargestellt ist, sind die virtuellen Register vorzugsweise in einen der Konverter 20, 26 implementiert.

Die Anzahl der virtuellen Register ist so angepasst, dass eine für das Schieben von JTAG-Daten durch diese Register benötigte Zeitdauer größer ist als die die Summe der Zeitdauern, die für eine Serialisierung der JTAG-Daten in einer Hin-Richtung vom Debugger 4 zum Mikrocontroller 2, eine Übertragung der serialisierten JTAG-Daten über die serielle Datenübertragungsverbindung 14 in der Hin-Richtung, eine Deserialisierung der serialisierten JTAG-Daten in der Hin-Richtung, eine Serialisierung der JTAG-Daten in einer Rück-Richtung entgegen der Hin-Richtung, eine Übertragung der serialisierten JTAG-Daten über die serielle Datenübertragungsverbindung 14 in der Rück-Richtung und eine Deserialisierung der serialisierten JTAG-Daten in der Rück-Richtung, benötigt wird.

Um JTAG-Daten durch die virtuellen Register zu schieben wird somit mehr Zeit benötigt, als die Serielle JTAG/Nexus-Übertragung für Hin- und Rückweg benötigt.

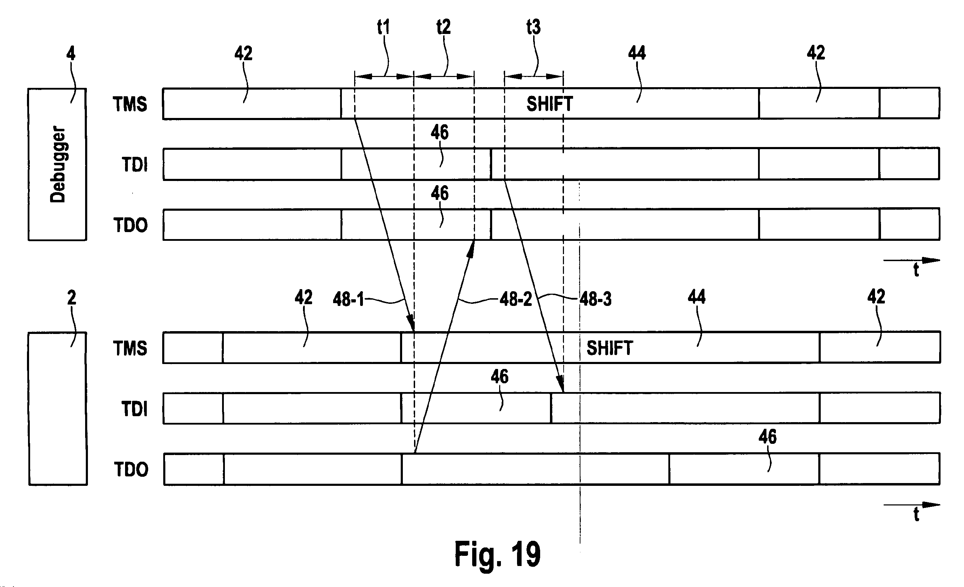

Figur 19 zeigt schematisch den zeitlichen Ablauf eines JTAG-Zugriffs über die Zeit t. Im oberen Teil der Figur 19 sind die Signale des Debuggers 4 dargestellt, in der unteren Hälfte die Signale am Mikrocontroller 2.

Für den Debugger 4 als auch für den Mikrocontroller 2 markiert der schraffierte Bereich 42 für das TMS-Signal Nicht-Shift-Zustände. Der ausgefüllte Bereich 44 markiert einen Shift-Zustand des TMS-Signals. Die Länge des schraffierten Bereiches 46 für das TDI-Signal und das TDO-Signal entspricht der Anzahl der virtuellen Register. Die Pfeile 48-1, 48-2, 48-3 markieren das Schieben der Bits zwischen Debugger 4 und Mikrocontroller 2. Die Erstreckung t1, t2, t3 jeweils eines der Pfeile 48-1, 46-2, 46-3 in t-Richtung markiert die Zeitdauer für das Serialisieren der JTAG-Daten, das Übertragen der serialisierten JTAG-Daten und das Deserialisieren der serialisierten JTAG-Daten für eine Richtung (Hin-Richtung bzw. Rück-Richtung). Wie in Figur 19 dargestellt ist die Summe der Zeitdauer für die Hin-Richtung t1 und der Zeitdauer für die Rück-Richtung t2 kleiner als die Zeitdauer, die benötigt wird um JTAG-Daten durch die virtuellen Register zu schieben, d. h kleiner als das Produkt T = (Dauer eines Taktes) x (Anzahl der virtuellen Register):

$$t1 + t2 < T$$

Beim Übergang des JTAG-Zustandautomats TAP in den Zustand SHIFT_DR oder SHIFT_IR werden vom Debugger 4 zunächst Fülldaten am Ausgang TDI geliefert, die durch den Mikrocontroller 2 hindurch geschoben werden. Der Mikrocontroller 2 sendet, sobald er nach der Übertragungslatenz den SHIFT-Zustand erreicht, JTAG-Daten an seinem TDO-Ausgang. Diese kommen nach einer weiteren Übertragungslatenz am Konverter (in Figur 19 nicht dargestellt) an und werden so lange gepuffert, bis die Anzahl der Takte TCK erreicht ist, die der Tiefe (d. h der Anzahl) der virtuellen Register entspricht. Ist diese Anzahl erreicht, sendet der Konverter die TDO-Daten an den Debugger 4.

Für den Debugger 4 stellt sich die Übertragungsstrecke wie das in Figur Figur 18 dargestellte System aus Mikrocontroller 2 und virtuellen Registern 40 dar. Da bei den meisten Debug-Systemen ein derartiger Instruktionsregister- und Datenregister-Präfix konfiguriert werden kann, lässt sich ein so implementiertes Serielles JTAG/Nexus ohne Software-Änderungen nutzen.

## Patentansprüche

1. Mikrocontrollervorrichtung (10) enthaltend einen Mikrocontroller (2), wobei die Mikrocontrollervorrichtung (10) eine serielle Debugschnittstelle (16) zur Kommunikation des Mikrocontrollers (2) mit einem Debugger (4) über eine serielle Datenübertragungsverbindung (14) aufweist,

   wobei der Mikrocontroller (2) eine parallele Debugschnittstelle (6) aufweist, die Mikrocontrollervorrichtung (10) einen Konverter (20) aufweist, welcher eine parallele Konverterschnittstelle (22) zur Kommunikation mit der parallelen Debugschnittstelle (6) des Mikrocontrollers (2) über eine parallele Datenübertragungsverbindung (24) aufweist, der Konverter (20) die serielle Debugschnittstelle (16) aufweist, und der Konverter (20) zum Konvertieren eines Datenstromes zwischen einem ersten parallelen Datenstrom an der parallelen Konverterschnittstelle (22) und einem seriellen Datenstrom an der seriellen Schnittstelle (16) ausgebildet ist,

   wobei dem Debugger (4) ein Konverter (26) zugeordnet ist,

   **dadurch gekennzeichnet, dass** die parallele Debugschnittstelle (6) eine parallele JTAG/Nexus-Schnittstelle ist und dass zur Anpassung des Debuggers (4) auf die zusätzliche Latenz durch die Serialisierung und Deserialisierung des JTAG-Ports dem JTAG-Pfad Register hinzugefügt werden, deren Anzahl so angepasst ist, dass eine für das Schieben von JTAG-Daten durch diese Register benötigte Zeitdauer größer ist als die Summe der maximalen Zeitdauern, die für eine Serialisierung der JTAG-Daten, eine Übertragung der serialisierten JTAG-Daten über die serielle Datenübertragungsverbindung (14) und eine Deserialisierung der serialisierten JTAG-Daten, jeweils in Hinrichtung und in Rückrichtung, benötigt wird.

2. Mikrocontrollervorrichtung (10) nach Anspruch 1, **dadurch gekennzeichnet, dass** der Konverter (20) einen Konverterbaustein (32) mit einer parallelen Bausteinschnittstelle (34) und der seriellen Schnittstelle (16) umfasst; und dass der Konverter eine Protokolllogik (36) zum Konvertieren eines Datenstromes zwischen dem der parallelen Debugschnittstelle (6) des Mikrocontrollers (2) angepassten ersten parallelen Datenstrom und einem dem Konverterbaustein (32) angepassten zweiten parallelen Datenstrom (38) umfasst.

3. Mikrocontrollervorrichtung (10) nach Anspruch 1, **dadurch gekennzeichnet, dass** die serielle Debugschnittstelle (16) der Mikrocontrollervorrichtung (10) in dem Mikrocontroller (2) implementiert ist.

4. Debugvorrichtung (12) enthaltend einen Debugger (4) zum Debuggen eines Mikrocontrollers (2), wobei die Debugvorrichtung (12) eine serielle Debugschnittstelle (18) zur Kommunikation des Debuggers (4) mit dem Mikrocontroller (2) über eine serielle Datenübertragungsverbindung (14) aufweist,

   wobei der Debugger (4) eine parallele Debugschnittstelle (8) aufweist, wobei die Debugvorrichtung (12) einen Konverter (26) aufweist, welcher eine parallele Konverterschnittstelle (28) zur Kommunikation mit der parallelen Debugschnittstelle (8) der Debuggers (4) über eine parallele Datenübertragungsverbindung (30) aufweist, wobei der Konverter (26) die serielle Debugschnittstelle (18) aufweist, und wobei der Konverter (26) zum Konvertieren eines Datenstromes zwischen einem ersten parallelen Datenstrom an der parallelen Konverterschnittstelle (28) und einem seriellen Datenstrom an der seriellen Schnittstelle (18) ausgebildet ist,

   wobei dem Mikrocontroller (2) ein Konverter (20) zugeordnet ist,

   **dadurch gekennzeichnet, dass** die parallele Debugschnittstelle (8) eine parallele JTAG/Nexus-Schnittstelle ist und dass zur Anpassung des Debuggers (4) auf die zusätzliche Latenz durch die Serialisierung und Deserialisierung des JTAG-Ports dem JTAG-Pfad Register hinzugefügt werden, deren Anzahl so angepasst ist, dass eine für das Schieben von JTAG-Daten durch diese Register benötigte Zeitdauer größer ist als die Summe der maximalen Zeitdauern, die für eine Serialisierung der JTAG-Daten, eine Übertragung der serialisierten JTAG-Daten über die serielle Datenübertragungsverbindung (14) und eine Deserialisierung der serialisierten JTAG-Daten, jeweils in Hinrichtung und in Rückrichtung, benötigt wird.

5. Debugvorrichtung (12) nach Anspruch 4, **dadurch gekennzeichnet, dass** der Konverter (26) einen Konverterbaustein mit einer parallelen Bausteinschnittstelle und der seriellen Schnittstelle umfasst und dass der Konverter (26) eine Protokolllogik zum Konvertieren eines Datenstromes zwischen dem der parallelen Debugschnittstelle (8) des Debuggers (4) angepassten ersten parallelen Datenstrom und einem dem Konverterbaustein angepassten zweiten parallelen Datenstrom umfasst.

6. Debugvorrichtung (12) nach Anspruch 4, **dadurch gekennzeichnet, dass** die serielle Debugschnittstelle (18) der Debugvorrichtung (12) in dem Debugger (4) implementiert ist.

7. Verfahren zur Kommunikation einer Mikrocontrollervorrichtung (10) mit einem Debugger (4), wobei die Mikrocontrollervorrichtung (10) einen Mikrocontroller (2) aufweist, wobei die Kommunikation über eine serielle Debugschnittstelle (16) der Mikrocontrollervorrichtung (10) und über eine serielle Datenübertragungsverbindung (14) abläuft, wobei ein paralleler Datenstrom von dem Mikrocontroller (2) über eine parallele Debugschnittstelle (6) des Mikrocontrollers (2) und über eine parallele Datenübertragungsverbindung (24) an eine parallele Konverterschnittstelle (22) eines Konverters (20) der Mikrocontrollervorrichtung (10) übertragen wird, vom dem Konverter (20) in einen seriellen Datenstrom konvertiert wird und an die serielle Debugschnittstelle (16) des Konverters (20) übertragen wird, wobei der serielle Datenstrom weiter an einen Konverter (26) übertragen wird, der dem Debugger (4) zugeordnet ist, und wobei die parallele Debugschnittstelle (6) eine parallele JTAG/Nexus-Schnittstelle ist und zur Anpassung des Debuggers (4) auf die zusätzliche Latenz durch die Serialisierung und Deserialisierung des JTAG-Ports dem JTAG-Pfad Register hinzugefügt werden, deren Anzahl so angepasst wird, dass eine für das Schieben von JTAG-Daten durch diese Register benötigte Zeitdauer größer ist als die Summe der maximalen Zeitdauern, die für eine Serialisierung der JTAG-Daten, eine Übertragung der serialisierten JTAG-Daten über die serielle Datenübertragungsverbindung (14) und eine Deserialisierung der serialisierten JTAG-Daten, jeweils in Hinrichtung und in Rückrichtung, benötigt wird.

8. Verfahren zur Kommunikation einer Debugvorrichtung (12) mit einem Microcontroller (2), wobei die Debugvorrichtung (12) einen Debugger (4) aufweist, wobei die Kommunikation über eine serielle Debugschnittstelle (18) der Debugvorrichtung (12) und über eine serielle Datenübertragungsverbindung (14) abläuft, wobei ein paralleler Datenstrom von dem Debugger (4) über eine parallele Debugschnittstelle (8) des Debuggers (4) und über eine parallele Datenübertragungsverbindung (30) an eine parallele Konverterschnittstelle (28) eines Konverters (26) der Debugvorrichtung (12) übertragen wird, vom dem Konverter (26) in einen seriellen Datenstrom konvertiert wird und an die serielle Debugschnittstelle (18) des Konverters (26) übertragen wird, wobei der serielle Datenstrom weiter an einen Konverter (20) übertragen wird, der dem Mikrocontroller (2) zugeordnet ist, und wobei die parallele Debugschnittstelle (8) eine parallele JTAG/Nexus-Schnittstelle ist und zur Anpassung des Debuggers (4) auf die zusätzliche Latenz durch die Serialisierung und Deserialisierung des JTAG-Ports dem JTAG-Pfad Register hinzugefügt werden, deren Anzahl so angepasst wird, dass eine für das Schieben von JTAG-Daten durch diese Register benötigte Zeitdauer größer ist als die Summe der maximalen Zeitdauern, die für eine Serialisierung der JTAG-Daten, eine Übertragung der serialisierten JTAG-Daten über die serielle Datenübertragungsverbindung (14) und eine Deserialisierung der serialisierten JTAG-Daten, jeweils in Hinrichtung und in Rückrichtung, benötigt wird.

## Claims

1. Microcontroller device (10) containing a microcontroller (2), the microcontroller device (10) having a serial debug interface (16) for communication between the microcontroller (2) and a debugger (4) via a serial data transmission connection (14), the microcontroller (2) having a parallel debug interface (6), the microcontroller device (10) having a converter (20) which has a parallel converter interface (22) for communicating with the parallel debug interface (6) of the microcontroller (2) via a parallel data transmission connection (24), the converter (20) having the serial debug interface (16), and the converter (20) being designed to convert a data stream between a first parallel data stream at the parallel converter interface (22) and a serial data stream at the serial interface (16), a converter (26) being assigned to the debugger (4), **characterized in that** the parallel debug interface (6) is a parallel JTAG/Nexus interface, and **in that**, in order to adapt the debugger (4) to the additional latency caused by the serialization and deserialization of the JTAG port, registers are added to the JTAG path, the number of said registers being adapted in such a manner that a period needed to shift JTAG data through these registers is greater than the sum of the maximum periods needed to serialize the JTAG data, transmit the serialized JTAG data via the serial data transmission connection (14) and deserialize the serialized JTAG data in the forward and return directions, respectively.

**2.** Microcontroller device (10) according to Claim 1, **characterized in that** the converter (20) comprises a converter module (32) with a parallel module interface (34) and the serial interface (16), and **in that** the converter comprises a protocol logic unit (36) for converting a data stream between the first parallel data stream adapted to the parallel debug interface (6) of the microcontroller (2) and a second parallel data stream (38) adapted to the converter module (32).

**3.** Microcontroller device (10) according to Claim 1, **characterized in that** the serial debug interface (16) of the microcontroller device (10) is implemented in the microcontroller (2).

**4.** Debug device (12) containing a debugger (4) for debugging a microcontroller (2), the debug device (12) having a serial debug interface (18) for communication between the debugger (4) and the microcontroller (2) via a serial data transmission connection (14),
the debugger (4) having a parallel debug interface (8), the debug device (12) having a converter (26) which has a parallel converter interface (28) for communicating with the parallel debug interface (8) of the debugger (4) via a parallel data transmission connection (30), the converter (26) having the serial debug interface (18), and the converter (26) being designed to convert a data stream between a first parallel data stream at the parallel converter interface (28) and a serial data stream at the serial interface (18),
a converter (20) being assigned to the microcontroller (2),
**characterized in that** the parallel debug interface (8) is a parallel JTAG/Nexus interface, and **in that**, in order to adapt the debugger (4) to the additional latency caused by the serialization and deserialization of the JTAG port, registers are added to the JTAG path, the number of said registers being adapted in such a manner that a period needed to shift JTAG data through these registers is greater than the sum of the maximum periods needed to serialize the JTAG data, transmit the serialized JTAG data via the serial data transmission connection (14) and deserialize the serialized JTAG data in the forward and return directions, respectively.

**5.** Debug device (12) according to Claim 4, **characterized in that** the converter (26) comprises a converter module with a parallel module interface and the serial interface, and **in that** the converter (26) comprises a protocol logic unit for converting a data stream between the first parallel data stream adapted to the parallel debug interface (8) of the debugger (4) and a second parallel data stream adapted to the converter module.

**6.** Debug device (12) according to Claim 4, **characterized in that** the serial debug interface (18) of the debug device (12) is implemented in the debugger (4).

**7.** Method for communication between a microcontroller device (10) and a debugger (4), the microcontroller device (10) having a microcontroller (2), communication taking place via a serial debug interface (16) of the microcontroller device (10) and via a serial data transmission connection (14),
a parallel data stream being transmitted from the microcontroller (2) to a parallel converter interface (22) of a converter (20) of the microcontroller device (10) via a parallel debug interface (6) of the microcontroller (2) and via a parallel data transmission connection (24), being converted into a serial data stream by the converter (20) and being transmitted to the serial debug interface (16) of the converter (20),
the serial data stream being transmitted on to a converter (26) which is assigned to the debugger (4),
and the parallel debug interface (6) being a parallel JTAG/Nexus interface and, in order to adapt the debugger (4) to the additional latency caused by the serialization and deserialization of the JTAG port, registers being added to the JTAG path, the number of said registers being adapted in such a manner that a period needed to shift JTAG data through these registers is greater than the sum of the maximum periods needed to serialize the JTAG data, transmit the serialized JTAG data via the serial data transmission connection (14) and deserialize the serialized JTAG data in the forward and return directions, respectively.

**8.** Method for communication between a debug device (12) and a microcontroller (2), the debug device (12) having a debugger (4), communication taking place via a serial debug interface (18) of the debug device (12) and via a serial data transmission connection (14),
a parallel data stream being transmitted from the debugger (4) to a parallel converter interface (28) of a converter (26) of the debug device (12) via a parallel debug interface (8) of the debugger (4) and via a parallel data transmission connection (30), being converted into a serial data stream by the converter (26) and being transmitted to the serial debug interface (18) of the converter (26),
the serial data stream being transmitted on to a converter (20) which is assigned to the microcontroller (2),
and the parallel debug interface (8) being a parallel JTAG/Nexus interface and, in order to adapt the debugger (4) to the additional latency caused by the serialization and deserialization of the JTAG port, registers being added to the JTAG path, the number of said registers being adapted in such a manner that a period needed to shift JTAG data through these registers is greater than the sum of the maximum periods needed to serialize the JTAG data, transmit the serialized JTAG data via the serial data transmission connection (14) and deserialize the serialized JTAG data in the forward and return directions, respectively.

## Revendications

1. Dispositif à microcontrôleur (10) comportant un microcontrôleur (2), dans lequel le dispositif à microcontrôleur (10) comprend une interface de débogage série (16) destinée aux communications du microcontrôleur (2) avec un débogueur (4) par l'intermédiaire d'une liaison de transmission de données (14),
   dans lequel le microcontrôleur (2) comprend une interface de débogage parallèle (6), le dispositif à microcontrôleur (10) comprend un convertisseur (20) qui comprend une interface de convertisseur parallèle (22) destinée aux communications avec l'interface de débogage parallèle (6) du microcontrôleur (2) par l'intermédiaire d'une liaison de transmission de données parallèle (24), le convertisseur (20) comprend l'interface de débogage série (16) et le convertisseur (20) est conçu pour convertir un flux de données entre un premier flux de données parallèle appliqué à l'interface de convertisseur parallèle (22) et un flux de données série appliqué à l'interface série (16), dans lequel un convertisseur (26) est associé au débogueur (4),
   **caractérisé en ce que** l'interface de débogage parallèle (6) est une interface parallèle JTAG/Nexus et **en ce que**, pour adapter le débogueur (4) à la latence supplémentaire due à la sérialisation et à la désérialisation du port JTAG, des registres sont ajoutés au trajet JTAG, dont le nombre est adapté de manière à ce qu'un intervalle de temps nécessaire au décalage des données JTAG à travers ces registres soit supérieur à la somme des intervalles de temps maximum qui sont nécessaires pour une sérialisation des données JTAG, une transmission des données JTAG sérialisées par l'intermédiaire de la liaison de transmission de données série (14) et une désérialisation des données JTAG sérialisées, respectivement en sens aller et en sens retour.

2. Dispositif à microcontrôleur (10) selon la revendication 1, **caractérisé en ce que** le convertisseur (20) comprend un composant convertisseur (32) ayant une interface dé composant parallèle (34) et l'interface série (16) ; et **en ce que** le convertisseur comprend une logique de protocole (36) destinée à convertir un flux de données entre le premier flux de données parallèle adapté à l'interface de débogage parallèle (6) du microcontrôleur (2) et un second flux de données parallèle (38) adapté au composant convertisseur (32).

3. Dispositif à microcontrôleur (10) selon la revendication 1, **caractérisé en ce que** l'interface de débogage série (16) du dispositif à microcontrôleur (10) est implantée dans le microcontrôleur (2).

4. Dispositif à microcontrôleur (12) comportant un débogueur (4) destiné à déboguer un microcontrôleur (2), dans lequel le dispositif de débogage (12) comprend une interface de débogage série (18) destinée aux communications du débogueur (4) avec le microcontrôleur (2) par l'intermédiaire d'une liaison de transmission de données série (14),
   dans lequel le débogueur (4) comprend une interface de débogage parallèle (8), dans lequel le dispositif de débogage (12) comprend un convertisseur (26) qui comprend une interface de convertisseur parallèle (28) destinée aux communications avec l'interface de débogage parallèle (8) du débogueur (4) par l'intermédiaire d'une liaison de transmission de données parallèle (30), dans lequel le convertisseur (26) comprend l'interface de débogage série (18), et dans lequel le convertisseur (26) est conçu pour convertir un flux de données entre un premier flux de données parallèle appliqué à l'interface de convertisseur parallèle (28) et un flux de données série appliqué à l'interface série (18),
   dans lequel un convertisseur (20) est associé au microcontrôleur (2), **caractérisé en ce que** l'interface de débogage parallèle (8) est une interface parallèle JTAG/Nexus et **en ce que**, pour adapter le débogueur (4) à la latence supplémentaire due à la sérialisation et à la désérialisation du port JTAG, des registres sont ajoutés au trajet JTAG, dont le nombre est adapté de manière à ce qu'un intervalle de temps nécessaire pour le décalage de données JTAG à travers ces registres soit supérieur à la somme des intervalles de temps maximum qui sont nécessaires pour une sérialisation des données JTAG, une transmission des données JTAG sérialisées par l'intermédiaire de la liaison de transmission de données série (14) et une désérialisation des données JTAG sérialisées, respectivement en sens aller et en sens retour.

5. Dispositif de débogage (12) selon la revendication 4, **caractérisé en ce que** le convertisseur (26) comprend un composant de convertisseur comportant une interface de composant parallèle et l'interface série et **en ce que** le convertisseur (26) comprend une logique de protocole destinée à convertir un flux de données entre le premier flux de données parallèle adapté à l'interface de débogage parallèle (8) du débogueur (4) et un second flux de données parallèle adapté au composant convertisseur.

6. Dispositif de débogage (12) selon la revendication 4, **caractérisé en ce que** l'interface de débogage série (18) du dispositif de débogage (12) est implantée dans le débogueur (4).

7. Procédé de communication d'un dispositif à microcontrôleur (10) avec un débogueur (4), dans lequel le dispositif à microcontrôleur (10) comprend un microcontrôleur (2), dans lequel les communications s'effectuent par l'intermédiaire d'une interface de débogage série (16) du dispositif à microcontrôleur (10) et par l'intermédiaire d'une liaison de transmission de données série (14),
dans lequel un flux de données parallèle est transmis par le à microcontrôleur (2) par l'intermédiaire d'une interface de débogage parallèle (6) du microcontrôleur (2) et par l'intermédiaire d'une liaison de transmission de données parallèle (24) à une interface de convertisseur parallèle (22) d'un convertisseur (20) du dispositif à microcontrôleur (10), est converti par le convertisseur (20) en un flux de données série et est transmis à l'interface de débogage série (16) du convertisseur (20),
dans lequel le flux de données série est en outre transmis à un convertisseur (26) qui est affecté au débogueur (4), et dans lequel l'interface de débogage parallèle (6) est une interface parallèle JTAG/Nexus et, pour adapter le débogueur (4) à la latence supplémentaire due à la sérialisation et la désérialisation du port JTAG, des registres sont ajoutés au trajet JTAG, dont le nombre est adapté de manière à ce qu'un intervalle de temps nécessaire au décalage des données JTAG à travers ces registres soit supérieur à la somme des intervalles de temps maximum qui sont nécessaires pour une sérialisation des données JTAG, une transmission des données JTAG sérialisées par l'intermédiaire de la liaison de transmission de données série (14) et une désérialisation des données JTAG sérialisées, respectivement en sens aller et en sens retour.

8. Procédé de communication d'un dispositif de débogage (12) avec un microcontrôleur (2), dans lequel le dispositif de débogage (12) comprend un débogueur (4), dans lequel les communications s'effectuent par l'intermédiaire d'une interface de débogage série (18) du dispositif de débogage (12) et par l'intermédiaire d'une liaison de transmission de données série (14), dans lequel un flux de données parallèle est transmis par le débogueur (4) par l'intermédiaire d'une interface de débogage parallèle (8) du débogueur (4) et par l'intermédiaire d'une liaison de transmission de données parallèle (30) à une interface de convertisseur parallèle (28) d'un convertisseur (26) du dispositif de débogage (12), est converti par le convertisseur (26) en un flux de données série et est transmis à l'interface de débogage série (18) du convertisseur (26),
dans lequel le flux de données série est en outre transmis à un convertisseur (20) qui est associé au microcontrôleur (2),
et dans lequel l'interface de débogage parallèle (8) est une interface parallèle JTAG/Nexus et, pour adapter le débogueur (4) à la latence supplémentaire due à la sérialisation et à la désérialisation du port JTAG, des registres sont ajoutés au trajet JTAG, dont le nombre est adapté de manière à ce qu'un intervalle de temps nécessaire au décalage de données JTAG à travers ces registres soit supérieur à la somme des intervalles de temps maximum qui sont nécessaires pour une sérialisation des données JTAG, une transmission des données JTAG sérialisées par l'intermédiaire de la liaison de transmission de données série (14) et une désérialisation des données JTAG sérialisées, respectivement en sens aller et en sens retour.

Fig. 1

Fig. 2

Fig. 3

Fig. 4

**Fig. 5**

DATA11 DATA10 DATA9 DATA8 DATA7 DATA6 DATA5 DATA4 DATA3 DATA2 DATA1 DATA0

| 0 0 0 0 |
| 0 0 1 x | Nexus
| 0 1 1 0 | JTAG
| 1 1 1 1 |

| | | |
|---|---|---|
| 0000 | | (z.B. /RESET, /EVTI, /EVTO) |
| 0010 0011 | Nexus | /MSEI[1..0] bzw. /MSEO[1..0] |
| 0100 | ETK | |
| 0110 | JTAG | JTAG-Link (TCK, TMS, TDI & TDO) |
| 1110 | | |
| 1111 | | |

**Fig. 6**

**Fig. 7**

TOOL_103 TOOL_102 TOOL_101 TOOL_100 Reserved VEND_102 /EVTO /RDY Reserved VALTREF VREF /RESET

µC → Debugger  | 0 | 0 | 0 | 0 | | | | | 0 | | | 0 | | | |

**Fig. 8**

Debugger → μC

| 0 | 0 | 0 | 0 | | | | 0 | | | | 0 | 0 | 0 | |

TOOL_103, TOOL_102, TOOL_101, TOOL_100, Reserved, VEND_102, /EVTI, /TRST, Reserved, /RESET

**Fig. 9**

Nexus
μC → Debugger

| 0 | 0 | 1 | 0 | | | | | | | | | | | | |

MDO9, MDO8, MDO7, MDO6, MDO5, MDO4, MDO3, MDO2, MDO1, MDO0, /MSEO1, /MSEO0

**Fig. 10**

Nexus
Debugger → μC

| 0 | 0 | 1 | 0 | | | | | | | | | | | | |

MDO19, MDO18, MDO17, MDO16, MDO15, MDO14, MDO13, MDO12, MDO11, MDO10, /MSEO1, /MSEO0

**Fig. 11**

Nexus (Burst)
Debugger → μC

| 0 | 0 | 1 | 1 | | | | | 0 | 0 |    | | |

MD 1, MD 0, /MSEO1, /MSEO0, Reserved, MDO[m_max], MDO[m-1], MDO[m]

## Fig. 12

Nexus (Burst)
Debugger → μC

MD 1
MD 0
/MSEI1
/MSEI0
Reserved
MD [m_max]

MD [m+1]
MD [m]

`0 0 1 1` ... `0 0`

## Fig. 13

/MSEI0 & /MSEO0

/MSEI0
/MSEO0

/MSEI0
/MSEO0

/MSEI0
/MSEO0

`0 0 1 x` ... `D8` ... `D4` ... `D0`

Burst    alligned

## Fig. 14

JTAG
μC → Debugger

Reserved
XCNT1
XCNT0
TMS3
TDO3
TMS2
TDO2
TMS1
TDO1
TMS0
TDO0

`0 1 1 0 0 0`

## Fig. 15

JTAG
Debugger → μC

Reserved
XCNT1
XCNT0
TMS3
TDI3
TMS2
TDI2
TMS1
TDI1
TMS0
TDI0

`0 1 1 0 0 0`

| XCNT[1..0] | |
|------------|---|
| 00 | 1 |
| 01 | 2 |
| 10 | 3 |
| 11 | 4 |

**Fig. 16**

**Fig. 17**

**Fig. 18**

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6385754 B1
- DE 19903302 A1

**In der Beschreibung aufgeführte Nicht-Patentliteratur**

- *IEEE-ISTO-5001™-2003,* 23. Dezember 2003, www.nexus5001.org